Europäisches Patentamt

**European Patent Office**

**Office européen des brevets**

(11) Publication number: **0 319 252**
**A2**

## EUROPEAN PATENT APPLICATION

(21) Application number: **88311308.6**

(22) Date of filing: **29.11.88**

(51) Int. Cl.⁴: **B65D 81/38**

(30) Priority: **29.11.87 NZ 222022**
**21.12.87 NZ 222999**
**08.02.88 NZ 223447**
**27.04.88 NZ 224406**

(43) Date of publication of application:
**07.06.89 Bulletin 89/23**

(84) Designated Contracting States:
**AT BE CH DE FR GB IT LI NL SE**

(71) Applicant: **BROWN GABLES HOLDINGS
LIMITED
14 Durham Street
Christchurch(NZ)**

(72) Inventor: **Brownlee, Ian Robert
186 Bridle Path Road
Christchurch(NZ)**

(74) Representative: **Ben-Nathan, Laurence Albert
et al
Urquhart-Dykes & Lord 91 Wimpole Street
London W1M 8AH(GB)**

(54) Insulating container.

(57) An insulating container formed from a composite material which comprises a layer of support material to at least one face of which is laminated a layer of metallized flexible plastics film which has a layer of vacuum-deposited metal on one surface thereof; the container when closed is capable of providing heat insulation for its contents such that ice/water at 0°C inside the closed container remains at 0°C for at least 20 hours, in an ambient temperature of 20°C.

EP 0 319 252 A2

EP 0 319 252 A2

## INSULATING CONTAINER

## BACKGROUND TO THE INVENTION

The present invention relates to a container capable of providing heat insulation, and which is suitable for transporting perishable products such as fresh fish, live mussels, frozen or chilled foods, cut flowers or plants or hot "take-away" foods.

Ideally, such a container should be robust, to protect the product, and resistant to impact damage, so that the container is not easily damaged during freight handling. The container also should be of minimum bulk, lightweight, inexpensive, provide an acceptable level of heat insulation, be easy to store before and after use, and be easy to dispose of in a manner which will not cause undue environmental pollution.

It is therefore an object of the present invention to provide a container which satisfies at least a majority of the above criteria, and to provide apparatus and methods for manufacturing such a container.

At present, the most commonly used type of container for the above-described applications is a lidded box of expanded polystyrene. Such a container is lightweight and provides acceptable heat insulation, but is bulky, easily damaged (especially by impact) and often is not completely waterproof. Also, polystyrene is not biodegradable, and burning polystyrene under normal conditions (i.e. other than with excess oxygen) tends to produce soot and unpleasant fume. If freons have been used in the production of the polystyrene, these freons are liberated when the polystyrene is burnt. Also, polystyrene is very susceptible to solvent damage. A further object of the invention therefore is the provision of a container which provides an acceptable replacement for a polystyrene container, with all the advantages, but none of the disadvantages, of polystyrene.

## BRIEF SUMMARY OF THE INVENTION

The present invention provides a closable container formed from a composite material having a thickness less than or equal to 4 mm, said material comprising: a layer of tough, impact-resistant support material to at least one face of which is laminated a layer of metallized flexible plastics film having on one surface thereof a layer of vacuum-deposited metal, said metal layer having a thickness in the range 90-360 Angstroms (preferably 100-200 Angstroms); said container being capable of providing heat insulation for its contents such that ice/water at $0^\circ$ C held inside said closed container remains at $0^\circ$ C for at least 20 hours, when the ambient temperature surrounding said closed container is $20^\circ$ C.

As used herein, the terms "tough" and "impact-resistant" are used in comparison with a polystyrene container. Clearly, the containers of the present invention are neither tough nor impact resistant compared to (for example) steel, but they are very considerably tougher and more resistant to impact damage than polystyrene.

The support material may be rigid or flexible, depending upon the particular application of the container; preferably, the support material is card, most preferably, corrugated card. As used herein, the term "card" includes both solid and corrugated card

The plastics film may be any suitable film which is inert to the produce to be packed in the container e.g. polyester film or polypropylene. It is believed that a number of different metals may be deposited on plastics film using vacuum-deposition techniques, but to date the most commonly-used metal is aluminum. Obviously, any metal used must be non-toxic and compatible with the film.

The preferred metallized plastics film is polyester film metallized with aluminium, in particular, 48 gauge polyester film having an aluminium layer 100 Angstroms thick. This film has low oxygen permeability and a low rate of water vapour transmis sion, compared to a range of other commercially-available films, as shown by the test results quoted in the Association of Industrial Metallizers Coaters & Laminators Technical Reference Book (Issue I). Thus, this film is capable of providing efficient waterproofing for the composite product.

The metallized plastics film may be laminated to one or both sides of the support material, and may be laminated with the metal layer adjacent the support material or with the plastics layer adjacent the support material. For containers for foodstuffs, the former is specified, because then the foodstuffs contact only the inert plastics film:- many foodstuffs regulations prohibit direct contact between foodstuffs and aluminium.

Also, if the container is to be used for a wet and/or an abrasive product, it is preferred that the metal layer lies adjacent the support material, so that the plastics film protects the metal layer from abrasion by

2

the product, and also provides waterproof containment for the product.

The finished composite material is folded, or cut and folded, using known box making techniques to make any desired style of container. For most applications, in the finished container the layer of plastics film forms the inner surface of the container, at least for the body of the container.

In the finished container, the support material provides the physical shape and strength of the container, plus some thermal insulation, and the metallized plastics film provides waterproofing and further thermal insulation, because the metal layer provides a thermally-reflective surface.

If the support material is a solid card, then the metallized plastics film may be laminated to it using known laminating equipment and techniques. However, the preferred support material is corrugated card, because corrugated card provides good heat insulation and is light and inexpensive. As used herein, the term "corrugated card" means card with a corrugated core sandwiched between, and glued to, two outer layers of smooth card or heavy paper.

Laminating generally is carried out in a graphic hot laminating machine (e.g. a Duophan Billhofer Laminator), but it is accepted in the industry (and by the manufacturers of such machines) that these machines do not operate satisfactorily when the feed card stock is corrugated card:- the core of the card tends to be crushed in the laminating process, and this ruins the final product.

To date, the view of the leading manufacturer of graphic laminating machines has been that it is impossible to modify an existing laminating machine to laminate corrugated card, and that corrugated card could be laminated only by using a specially-build coating machine. Such a coating machine does not, in fact, exist, and would have to be specially designed and made. In any case, the coating process is a longer and more complex process than the usual laminating process, and less satisfactory to operate commercially.

In view of the above, it is therefore surprising that the present applicants have designed relatively simple modifications to a known hot graphic laminating machine which enable that machine to laminate corrugated card, with excellent results.

The present invention provides: a graphic laminating machine comprising: a conveyor for supporting card to be laminated, and for carrying said card between a heated driven nip roller and an idler pressure roller; said pressure roller being movable towards said nip roller by means of an hydraulic ram which is provided with a pneumatic cushion arranged such that said pressure roller is cushioned if the pressure applied thereby exceeds a predetermined value; the longitudinal axes of the nip and pressure rollers being parallel and substantially perpendicular to the longitudinal axis of the direction of motion of the conveyor; a bow roller comprising a stationary roller bowed along its length and mounted adjacent the nip roller such that the bow is upwardly convex, with the length of the roller parallel to the longitudinal axis of the nip roller; the length of the bow roller being equal to or greater than the width of film to be laminated to said card; and guide means for guiding said film through adhesive-applying apparatus, and then over said bow roller and between said nip and pressure rollers.

The present invention further provides a method of operating said machine, including: placing sheets of card to be laminated on said conveyor; providing a supply of metallized plastics film (as hereinbefore defined); guiding said film by said guide means through said adhesive-applying apparatus, then over said bow roller before said film reaches said nip roller, such that the curve of said bow roller stretches and tensions said film, and then onto the upper surface of said card and between the nip and pressure rollers; and adjusting said pneumatic cushioning such that the pressure applied by the pressure roller to the card plus film remains below said predetermined value, regardless of variations in thickness of the card.

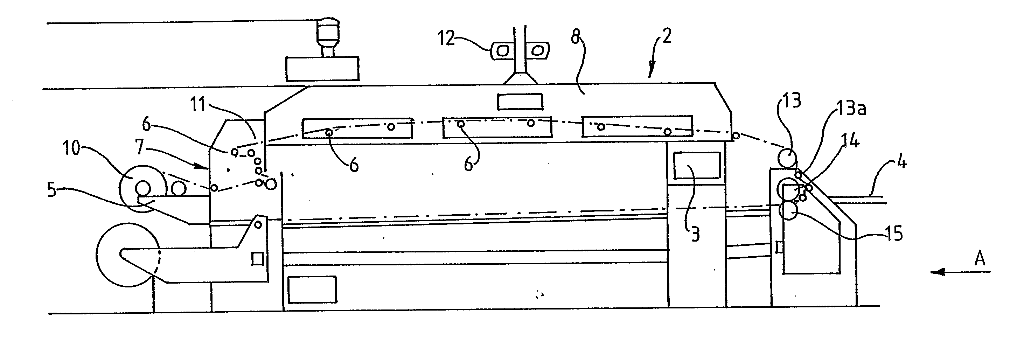

## BRIEF DESCRIPTION OF THE DRAWING

By way of example only, a preferred embodiment of the present invention is described in detail, with reference to the accompanying drawing, which shows a schematic longitudinal section through the machine of the present invention.

## DETAILED DESCRIPTION OF PREFERRED EMBODIMENTS

Referring to the drawing, the machine is basically a Billhofer Duophan 2400-Type AVK102 graphic hot laminating machine. Since the machine is of well-known design, only its essential features, and the modifications occasioned by the present invention will be described.

The machine 2 includes a control panel 3, a conveyor 4 which extends the full length of the machine,

3

holders 5 for supporting a roll of material to be laminated onto the card stock, and a series of rollers 6 for guiding said material through adhesive-applying equipment 7 and then through an oven 8, where the adhesive is partially dried.

In an unmodified machine, said material travels down towards the conveyor 4 along a sloping path directly to a nip roller 14. However, in the machine of the present invention, said material travels from the outlet of oven 8 and over a bow roller or banana roller 13, which is added to the modified machine.

The machine of the present invention operates as follows: a roll 10 of metallized plastics film 11 is mounted on the holders 5, and the free end led through the machine ready for start-up. In its path through the machine, the film 11 travels through the adhesive-applying equipment 7 which comprises an adhesive trough, an applicator roller, and a doctor roller (not shown), all of which operate in known manner. Alternatively, other suitable known adhesive-applying equipment may be substituted.

The film 11, with the adhesive applied to the non-metallized surface thereof, travels from the equipment 7 to the oven 8, where it is heated by infra-red heaters and by hot-air blowers 12, to partially dry the adhesive, so that when the film 11 emerges from the oven outlet, the adhesive is almost dry, but still tacky.

After the film 11 emerges from the oven 8, it passes over a stationary, rubber-surfaced, bow roller or banana roller 13 which is spaced above the conveyor 4, substantially vertically above a nip roller 14 and pressure roller 15.

The bow roller 13 is somewhat longer than the width of the film 11, and its length is perpendicular to the direction A of movement of the conveyor. The bow roller 13 is bowed along its length, and is arranged with the bow upwardly convex. Thus, when the film 11 passes over the roller 13, the film is both supported and slightly stretched. The natural elasticity of the film ensures that it contracts back to its original width as it leaves the bow roller 13, but the said slight stretching ensures that the film is completely flat and at the correct tension as it passes over the nip roller 14.

Corrugated card stock is placed on the beginning of conveyor 4 by hand or automatically. The card stock generally is in rectangular sheets, and adjacent sheets are overlapped at the ends, to provide a continuous surface to which the film can be laminated. Alternatively, adjacent sheets can be butted together, but this is more difficult to arrange, and the laminated end-product is less satisfactory.

The conveyor 4 is perforated, and suction is applied below the conveyor to hold the card stock tightly down onto the conveyor.

The conveyor carries the card stock towards the nip roller 14 and the pressure roller 15. As the card stock reaches these rollers, the film 11 is guided down from the bow roller 13, around a guide roller 13a, and over the nip roller 14, so that the adhesive-coated surface of the film contacts the upper surface of the card stock. The film and the card stock are then pressed together by the nip roller 14 and pressure roller 15.

The nip roller 14 is a heated, chrome-surfaced calender roller, and is driven. The pressure roller 15 is aligned with the nip roller such that the longitudinal axes of the rollers lie in the same vertical plane. The pressure roller 15 is a rubber-surfaced idler roller and can be moved towards or away from the nip roller by means of one or more hydraulic rams (not shown). The pressure roller 15 applies a pressure upwards towards the nip roller:- a typical pressure applied by the pressure roller is 5000 kilopascals where standard E-flute corrugated card is being laminated. The pressure is needed to squeeze the film 11 firmly onto the card, but if excessive pressure is used, the card may be crushed and/or the film may be stretched and distorted or even torn. With unmodified laminating machines, the increase in pressure on the card stock and film when the overlapped portion of two adjacent card sheets passes between the nip and pressure rollers increases the pressure to an excessive value, and the above-described problems result. However, in the machine of the present invention, the or each hydraulic ram includes a pneumatic cushion, which cushions the sudden increase in pressure when said overlap portion (or any other portion of increased thickness) is reached, and prevent the pressure applied by the pressure roller from exceeding a predetermined value.

The final laminated product leaves the end of the machine and may be cut into portions as required. The film is securely laminated to the card stock, so that the laminate board can be die-cut or scored if required.

The adhesive applied to the film may be any suitable solvent-based or water-based laminating adhesive (e.g. 408-40 Morton Tycol). The adhesive must have a good green-tack strength. The thickness of the adhesive layer applied to the film depends upon the type of card stock to be used, and in particular upon the absorbency of its surface. Similarly, the temperature of the nip roller depends upon the materials being used.

As an alternative to the above-described laminating technique, laminated corrugated card may be produced by modifying the equipment which produces the corrugated cardboard itself, to produce the laminated corrugated card in a single in-line process in which the metallized plastics film is laminated to one of the webs of heavy paper (for forming one face of the corrugated card), and this lamination is then combined with the central layer of corrugated cardboard and the other layer of heavy paper which forms the other face of the corrugated card, to form the laminated corrugated card. If any other layers are required (for example, a second metallized plastics layer or an outer layer of plasticised sheet) these also are incorporated in the process.

The metallized film laminated corrugated card of the present invention present no especial problems to boxmakers, and may be made into boxes using any of a range of known box-making techniques.

If the container is to be used to carry wet produce, then the preferred boxmaking technique is that known as a "wet-lock" box, in which the base is folded in such a way that it is waterproof. A box of this type may have an integrally-formed lid or a separate lid.

To test the effectiveness of the containers of the present invention as a direct substitute for polystyrene containers, a series of tests were carried out, the results of which are given below. Tests 1 and 2 were carried out by the New Zealand Government Department of Scientific & Industrial Research, and Test 3 by an independant consultant on food microbiology. In all of the Tests, the containers of the present invention were made from card to at least one face of which was laminated 48-gauge metallized polyester film having an aluminium layer of approximately 100 Angstroms. The lamination was carried out on the above-described machine.

## 1. Thermal Performance Test

Three containers were constructed as follows:

(a) Solid card laminated as described above on both faces of the card, and with an overall thickness of 2 mm, was made into a one-piece box (i.e. lid integral with base) having internal dimensions 370 mm x 380 mm x 140 mm.

(b) Corrugated card with an overall thickness of 1.5 mm, and laminated as described above on one face of the card only was made into a two-piece box having internal dimensions 400 mm x 300 mm x 140 mm, with the metallized film layer on the exterior of the lid and on the interior of the body.

(c) A box as in (b) but with the metallized film layer on the interior of the body only.

Three sets of three litre quantities of purified water were measured into plastic tray and cooled to -17°C. Type T thermocouples were cast into the resulting ice in the trays in order to monitor the icetray temperature.

The trays were then placed inside the containers which were housed in a closely controlled environment room at 20.0°C ± 0.5°C. The boxes were positioned to achieve equivalent thermal ambient conditions, taking into account convective and radiant effect, and the tray temperatures monitored continuously.

The time taken for the three litre quantity of water to remain at the ice point temperature plateau was recorded for each container.

All the containers remained at the ice point temperature plateau (0.00°C) for 1545 minutes ± 15 minutes.

As a comparison, identical tests carried out on polystyrene fish boxes yielded results as follows:

| Box Internal Dimensions (mm) | Max. Polystyrene Thickness (mm) | Time at Plateau (minutes) |
|---|---|---|
| 552 x 377 x 118 | 27 | 1600 |
| 550 x 295 x 155 | 30 | 1950 |
| 546 x 349 x 196 | 30 | 1700 |
| 545 x 290 x 120 | 34 | 2560 |
| 552 x 297 x 150 | 34 | 2430 |

Thus, the containers of the present invention provided heat insulation comparable to a polystyrene container having a wall-thickness of 27 mm i.e. 18 times thicker than the 1.5 mm thick laminated corrugated card container or 13.5 times thicker than the 2 mm thick laminated solid card container. This test also demonstrated the superior insulating properties of corrugated card, as compared to solid card; corrugated card 1.5 mm thick provided equivalent insulation to solid card 2.0 mm thick.

## 2. Hermetic Seal Test

The object of this text was to establish whether a two-piece "wet-lock" box made in accordance with the present invention was capable of providing an hermetic seal, in case the heat insulating properties of the box could be attributed wholly or partly to the presence of an hermetic seal i.e. to find out whether the heat insulating properties of the box were due to the material of which the box was made, or to its design and construction.

A container constructed in accordance with sample (b) of the Thermal Performance Test was treated as follows:

The container was subjected to an internal air pressure to determine whether the container remained air-tight under usual air freight conditions.

The internal air pressure was set at 15 kPa, as determined by the usual airline practice of pressurization of freight holds to the equivalent height of 1500 metres.

A mercury manometer was used to measure the applied pressure and also to determine whether the container held the pressure when valved off from the controlled and regulated air supply.

The plastic internal liner was also tested to 15 kPa after sealing the top opening with masking tape.

The container was found to be not capable of remaining air-tight under normal airfreight conditions. Air pressure was not maintained within the container for more than one half second after valving off of the air supply.

The plastic liner, as prepared, was capable of providing an hermetic seal.

The conclusion reached from this test was that the combination container/plastic liner is capable of maintaining an hermetic seal, but the seal is totally dependant on the quality of the plastic liner closing method. Any breaches of the liner's top seal or puncture of the liner material would render the container/liner system open to ingress/egress of air.

Thus, the container itself is not capable of providing an hermetic seal. Since the containers tested in the Thermal Performance Test were not provided with an inner liner, it must be concluded that the material of the box, rather than any particular design of box, was responsible for the heat insulation properties.

## 3. Test on Bacterial Counts in Stored Fish

This test was designed to study the rate and pattern of spoilage of fish in containers in accordance with the present invention, and to compare this with the rate and pattern of spoilage of fish in polystyrene containers. Fish was selected for these tests because fresh wet fish is a very difficult product to store and transport:- fish tends to have a high bacterial count even when completely fresh, and since bacteria (given suitable conditions) will double in number as often as every 20 minutes, the spoilage of fish, which provides a particularly favourable environment for bacterial growth, can be very rapid. In practical situations, fresh fish needs to be kept in good condition for 12-16 hours.

The test comprised two separate trials, in each of which chilled fresh fish fillets in 10 kg lots were packed in plastic bags (not sealed) and then into each of five boxes in accordance with the present invention and into five polystyrene fish boxes.

The boxes in accordance with the present invention were two-piece boxes of the "wet-lock" design with internal dimensions 400 mm x 300 mm x 140 mm and an overall thickness of card of 1.5 mm. The metalized-film layer was on the interior of the base of the box and on the exterior of the lid.

The polystyrene fish boxes had internal dimensions (mm) of 552 mm x 337 mm x 118 mm, with a wall thickness of 27 mm, and were two-piece boxes of known type.

All ten boxes were placed in a cool room which was maintained at 4°C ± 1°C. The temperature of 4°C was selected as being a reasonable "average" temperature to mimic airfreight conditions. Obviously, real airfreight conditions vary from (typically) 25°C for short periods, for containers left on the runway during loading, to very low temperatures indeed in unheated cargo holds; it is impossible to mimic these fluctuations exactly in laboratory conditions, so a single temperature had to be selected as a reasonable average. Within two hours of receipt, and after two days' and four days' storage, 50 g samples of fish from each box were taken aseptically, and total viable bacteria counts were performed on these samples, according to the methods described in "APHA Compendium of Methods for the Microbiological Examination of Foods" (2nd Edition) 1984, Marvin L. Speck, Editor. Bacterial counts were recorded after three days' incubation at 22°C. The results for the two trials are given below.

## BACTERIAL COUNTS PER GRAM

### TRIAL ONE

**Laminate Boxes**

| Day 0 | Day 2 | Day 4 |
|---|---|---|
| 132,000 | 170,000 | 2,600,000 |
| 7,200,000 | | |
| 549,000 | 310,000 | 3,800,000 |
| 1,300,000 | | |
| 386,000 | 210,000 | 2,300,000 |
| 3,100,000 | | |
| 115,000 | 61,000 | 900,000 |
| 1,610,000 | | |
| 256,000 | 110,000 | 2,580,000 |
| 3,000,000 | | |

**Polystyrene Boxes**

| Day 0 | Day 2 | Day 4 |
|---|---|---|
| 351,000 | 190,000 | 000 |
| 124,000 | 180,000 | 000 |
| 263,000 | 440,000 | 000 |
| 237,000 | 210,000 | 000 |
| 185,000 | 116,000 | 000 |

### TRIAL TWO

**Laminate Boxes**

| Day 0 | Day 2 | Day 4 |
|---|---|---|
| 145,000 | 300,000 | 6,750,000 |
| 5,940,000 | | |
| 140,000 | 200,000 | 3,500,000 |
| 11,620,000 | | |
| 143,000 | 203,000 | 5,400,000 |
| 11,880,000 | | |
| 125,000 | 200,000 | 7,560,000 |
| 3,260,000 | | |
| 80,000 | 365,000 | 6,100,000 |
| 7,020,000 | | |

**Polystyrene Boxes**

| Day 0 | Day 2 | Day 4 |
|---|---|---|
| 290,000 | 550,000 | 000 |
| 75,000 | 196,000 | 000 |
| 200,000 | 300,000 | 000 |
| 1,200,000 | 325,000 | 000 |
| 155,000 | 140,000 | 000 |

In the first trial, a further set of five boxes in accordance with the present invention were used as a control, samples being taken from these boxes only at the beginning and end of the first trial, as a check on whether opening the boxes to obtain the samples effected the trial results. However, the controls showed that the results were not influenced by opening the boxes, and the controls were not used in the second trial.

In both trials, bacterial counts on average remained relatively unchanged, or decreased, over the first two days. In Trial One, the counts tended to decline in the laminated boxes during the first two days. This did not appear to occur for fish in polystyrene boxes or in either packaging in the second trial. With both box types, counts increased by a factor of ten or more between days 2 and 4.

In the trials reported here it can be seen that the fish when first sampled usually had a count in the region of several hundred thousand per gram of tissue. Both types of packaging were able to ensure the retention of counts of this magnitude for 48 hours. Thus both packagings delayed the onset of spoilage which began to occur between days 2 and 4 as evidenced by the increase in counts to values in excess of a million per gram, in all samples, irrespective of packaging.

These trials allow the conclusion that the storage characteristics at 4°C for fish packed in the metallized-film laminated boxes are at least comparable with those for polystyrene boxes and may in some cases be superior.

As noted above, fish being transported or exported needs to be packed so as to be capable of remaining in good condition, without refrigerated storage, for about 12-16 hours. As is evident from the above-described tests, the containers of the present invention are capable of maintaining ice/water at ice-point (0°C) for approximately 26 hours, in an ambient temperature of 20°C, and of sufficiently insulating fresh fish so as to delay the onset of spoilage for 48 hours, at an ambient temperature of 4°C. Thus, the containers of the present invention would comfortably exceed the minimum conditions required for containers for perishables, even when used with fresh wet fish (which generally is considered to be one of the most difficult perishables to freight).

It will be appreciated that, since the composite material of the present invention can be made up using any standard box-making designs, it is easy to manufacture a container which can be folded flat before and after use, to minimize storage space. This gives the containers of the present invention a considerable advantage over polystyrene containers, which of course cannot be folded down at all.

The very thin walls of the containers of the present invention, (compared to polystyrene containers) greatly reduce the overall bulk of each container. Indeed, substituting containers of the present invention (with wall thickness 1.5 mm) for equivalent polystyrene containers results in approximately 53% reduction in total volume, for the same weight of produce in the containers. Obviously, this reduction in volume produces considerable savings in freight costs.

A further advantage of the containers of the present invention is that product may be blast-frozen in the containers - this is not possible with polystyrene containers.

The containers of the present invention may be burnt (preferably using forced draft incineration) without producing significant quantities of noxious gases, and, in the long term, are bio-degradable providing the polyester film is exposed to sunlight. In contrast, burning polystyrene produces heavy soot and unpleasant fumes, and may liberate freons (for this reason, it is banned in many countries) and polystyrene is not bio-degradable, even in the long term.

The containers of the present invention in general cost about $\frac{2}{3}$ or less of the cost of an equivalent polystyrene container, and are much less susceptible to damage in freight handling, since the card is inherently much tougher and more resistant to impact damage than polystyrene.

## Claims

1. A closable container formed from a composite material having a thickness less than or equal to 4 mm, said material comprising: a layer of tough, impact-resistant support material to at least one face of which is laminated a layer of metallized flexible plastics film having on one surface thereof a layer of vacuum-deposited metal, said metal layer having a thickness in the range 90-360 Angstroms; said container being capable of providing heat insulation for its contents such that ice/water at 0°C held inside said closed container remains at 0°C for at least 20 hours, when the ambient temperature surrounding said closed container is 20°C.

2. The container as claimed in claim 1 wherein the support material is rigid.

3. The container as claimed in claim 1 wherein the support material is flexible.

4. The container as claimed in any preceding claim wherein the thickness of said metal layer is in the range 100-200 Angstroms.

5. The container as claimed in any preceding claim wherein said metal layer is aluminium.

6. The container as claimed in any preceding claim wherein said support material is solid card.

7. The container as claimed in any one of claims 1-5 wherein said support material is corrugated card.

8. The container as claimed in claim 7 wherein said support is E-flute corrugated card.

9. The container as claimed in any preceding claim wherein the plastics film is polyester.

10. The container as claimed in claim 9 wherein the plastics film is 48 gauge polyester.

11. The container as claimed in any one of claims 1-8 wherein the plastics film is polypropylene.

12. The container as claimed in any preceding claim wherein the metallized plastics film is laminated to the support material such that the metal layer is exposed.

13. The container as claimed in any one of claims 1-11 wherein the metallized plastics film is laminated to the support material such that the metal layer lies adjacent said support material.

14. The container as claimed in any preceding claim wherein a layer of metallized plastics film is laminated to both faces of said support material.

15. The container as claimed in any one of claims 1-13 wherein the layer of metallized plastics film is on the exterior surface of the container.

16. The container as claimed in any one of claims 1-13 wherein the layer of metallized plastics film is on the interior surface of the container.

17. The container as claimed in any one of claims 1-13 wherein the container is a two-piece container comprising a base and a lid, and the layer of plastics film is on the exterior surface of the lid and on the interior surface of the base.

18. The container as claimed in any preceding claim wherein the thickness of the composite material is in the range 1.4.-2.1 mm.

8

19. A graphic laminating machine comprising: a conveyor for supporting card to be laminated, and for carrying said card between a heated driven nip roller and an idler pressure roller; said pressure roller being movable towards said nip roller by means of an hydraulic ram which is provided with a pneumatic cushion arranged such that said pressure roller is cushioned if the pressure applied thereby exceeds a predetermined value; the longitudinal axes of the nip and pressure rollers being parallel and substantially perpendicular to the longitudinal axis of the direction of motion of the conveyor; a bow roller comprising a stationary roller bowed along its length and mounted adjacent the nip roller such that the bow is upwardly convex, with the length of the roller parallel to the longitudinal axis of the nip roller; the length of the bow roller being equal to o greater than the width of film to be laminated to said card; and guide means for guiding said film through adhesive-applying apparatus, and then over said bow roller and between said nip and pressure rollers.

20. The graphic laminating machine as claimed in claim 19 wherein said bow roller is rubber surfaced.

21. The graphic laminating machine as claimed in claim 19 or claim 20 wherein said pressure roller is rubber surfaced.

22. The graphic laminating machine as claimed in any one of claims 19-21 wherein said bow roller is located vertically above said nip roller.

23. A method of operating the machine as claimed in any one of claims 19-22 including: placing sheets of card to be laminated on said conveyor; providing a supply of metallized plastics film (as hereinbefore defined); guiding said film by said guide means through said adhesive-applying apparatus, then over said bow roller before said film reaches said nip roller, such that the curve of said bow roller stretches and tensions said film, and then onto the upper surface of said card and between the nip and pressure rollers; and adjusting said pneumatic cushioning such that the pres sure applied by the pressure roller to the card plus film remains below and predetermined value, regardless of variations in thickness of the card

24. The method as claimed in claim 23 wherein the adhesive is heat-settable and the adhesive coated film is passed through an oven to partially set the adhesive before the film reaches the bow roller.

EP 0 319 252 A2